Europäisches Patentamt

European Patent Office

Office européen des brevets

(11) Veröffentlichungsnummer: **0 149 771**
**B1**

(12) # EUROPÄISCHE PATENTSCHRIFT

(45) Veröffentlichungstag der Patentschrift:
**11.05.88**

(51) Int. Cl.⁴: **G 01 F 1/56,** G 01 D 5/08

(21) Anmeldenummer: **84114782.0**

(22) Anmeldetag: **05.12.84**

(54) Induktives Sonden-Durchflussmesssystem.

(30) Priorität: **27.12.83 DE 3347190**

(43) Veröffentlichungstag der Anmeldung:
**31.07.85 Patentblatt 85/31**

(45) Bekanntmachung des Hinweises auf die Patenterteilung:
**11.05.88 Patentblatt 88/19**

(84) Benannte Vertragsstaaten:
**DE FR GB**

(56) Entgegenhaltungen:
**DE - A - 2 120 523**
**DE - A - 3 105 382**
**DE - A - 3 117 319**
**FR - A - 2 360 871**
**JP - A - 78 128 363**

(73) Patentinhaber: **INTERATOM Gesellschaft mit beschränkter Haftung, Friedrich-Ebert-Strasse, D-5060 Bergisch Gladbach 1 (DE)**

(72) Erfinder: **Knaak, Joachim, Dr. Dipl.-Ing., Am Rabenhorst 15, D-5060 Bergisch-Gladbach (DE)**

(74) Vertreter: **Mehl, Ernst, Dipl.-Ing. et al, Postfach 22 01 76, D-8000 München 22 (DE)**

## Beschreibung

Die vorliegende Erfindung betrifft ein induktives Durchflussystem nach dem Oberbegriff des ersten Anspruchs. Ein solches Durchflussmessystem ist beispielsweise aus der DE-A-3 117 319 bekannt. Die drei Induktionsspulen sind dabei in Strömungsrichtung hintereinander angeordnet. Bei induktiven Durchflussmessystemen nach dem Stand der Technik ist es üblich, vgl. DE-A-2 120 523, drei oder mehr Induktionsspulen in Strömungsrichtung hintereinander auf einem gemeinsamen Kern anzuordnen. Die beiden äusseren Spulen oder die innere Spule werden dabei mit einem Wechselstrom angesteuert und die in den anderen Spulen induzierte Spannung gemessen. Eine an dem Spulensystem vorbeiströmende elektrisch leitfähige Flüssigkeit beeinflusst die transformatorische Kopplung der Spulen untereinander durch in der Flüssigkeit gebildete Wirbelströme und deren magnetische Auswirkungen. Durch Wahl verschiedener Betriebsfrequenzen können ausserdem neben dem Durchfluss auch andere Parameter wie Temperatur oder Blasengehalt bestimmt werden.

Aus der FR-A-2 360 871 ist die Unterbringung von solchen Durchflussmessystemen in Sondenrohren, die in eine Rohrleitung eingeführt werden können, bekannt. Die dort beschriebene Anordnung der Spulen auf einem gemeinsamen, parallel zur Strömungsrichtung liegenden Kern, erfordert jedoch die Zuführung der Sonden durch ein gekrümmtes Führungsrohr oder an einer Rohrkrümmung.

Alle nach dem Stand der Technik bekannten induktiven Durchflussmessysteme mit drei oder mehr Spulen weisen den Nachteil auf, dass sie in Strömungsrichtung verhältnismässig ausgedehnt sind, so dass die Verwendung als kleine Sonden, die beispielsweise durch die Wandung einer Rohrleitung nach innen geführt werden und auswechselbar sein sollen, an geraden Rohrleitungsstücken nicht gut möglich ist. Das Anbringen von solchen Sonden an Rohrleitungskrümmern ist aus sicherheitstechnischen Überlegungen unerwünscht.

Aufgabe der vorliegenden Erfindung ist es, ein Sonden-Durchflussmessystem anzugeben, welches in Strömungsrichtung nur eine ganz geringe Ausdehnung hat und daher als Sonde von der Seite, beispielsweise in eine Rohrleitung, senkrecht zur Strömungsrichtung eingefahren werden kann. Dabei soll das Messystem so ausgelegt sein, dass eine Durchflussmessung auch noch durch relativ dicke Wände eines Schutzrohres möglich ist. Gegebenenfalls soll das Durchflussmessystem auch die übrigen mit solchen Systemen durchführbaren Messungen von anderen Parametern ermöglichen.

Zur Lösung dieser Aufgabe wird ein induktives Durchflussmessystem nach dem ersten Anspruch vorgeschlagen. Danach werden drei zylindrische Induktionsspulen in Bezug auf ihre Achsen ungefähr parallel nebeneinander angeordnet, und zwar in einer in Strömungsrichtung liegenden Ebene, wobei die einzelnen Spulen senkrecht zur Strömungsrichtung liegen. Die Spulen liegen dementsprechend wie beim Stand der Technik in Strömungsrichtung hintereinander, sind jedoch nicht mehr auf einen gemeinsamen Kern gewickelt, sondern haben drei verschiedene Achsen. Der Betrieb eines solchen Spulensystems kann aber ganz analog zum Stand der Technik erfolgen. Es kann beispielsweise die mittlere Spule mit einem Wechselstrom als Sendespule betrieben werden, während die in den beiden benachbarten Spulen induzierten Spannungen miteinander verglichen werden, wobei die Spannungsdifferenz ein Mass für die Strömungsgeschwindigkeit der Flüssigkeit ist. Andere Parameter können gegebenenfalls ganz entsprechend dem in der DE-A-2 120 523 beschriebenen System gemessen werden. Der entscheidende Vorteil der erfindungsgemässen Anordnung der Spulen ist, dass die so aufgebaute Messstelle eine viel geringere Ausdehnung in Strömungsrichtung hat als dies vorher der Fall war. Ein solches Spulensystem lässt sich in einem Hüllrohr (Sondenrohr) von nur etwa 3–4 cm Durchmesser unterbringen, wobei die Spulen in einer Querschnittsebene dieses Sondenrohres angeordnet sind. In dieser Möglichkeit liegt der wesentliche Anwendungsbereich der Erfindung. Die Unterbringung in einem Sondenrohr ermöglicht die Konstruktion eines auswechselbaren Durchflussmessers, wobei zusätzlich die Möglichkeit zur Ausmessung eines Strömungsprofils durch Verschieben einer solchen Sonde gegeben wird.

In weiterer Ausgestaltung der Erfindung wird in Anspruch 2 vorgeschlagen, dass die Spulen jeweils auf einen ferromagnetischen Kern gewickelt sind. Diese Massnahme erhöht die transformatorische Kopplung der Spulen und verbessert gleichzeitig die Richtwirkung der transformatorischen Kopplung. Im vorliegenden Falle bedeutet dies, dass die Magnetfeldlinien, welche die transformatorische Kopplung der Spulen bewirken, weit in den Raum ausserhalb des Sondenrohres gelenkt werden, wodurch sich die Möglichkeit ergibt, auch durch dickere Schutzwände, welche aus Sicherheitsgründen das eigentliche Sondenrohr oft umgeben müssen, präzise Messungen auszuführen.

In spezieller Ausgestaltung der Erfindung wird im Anspruch 3 hierzu vorgeschlagen, dass die Spulenkerne in die Wand des Sondenrohres eingelassen und vorzugsweise mit dieser laserverschweisst sind. Diese Massnahme führt zu einer kompakten Baueinheit von Sondenrohr und Magnetkern und bedeutet eine günstige Ausnutzung der gegebenen Platzverhältnisse.

In weiterer Ausgestaltung der Erfindung wird im Anspruch 4 vorgeschlagen, dass in einem Sondenrohr in mehreren Querschnittsebenen je eine aus drei Spulen bestehende Messstelle angebracht ist. Somit weist eine Sonde mehrere Messstellen auf, was bei ungleichmässigen Strömungsprofilen eine erhebliche Steigerung der Messgenauigkeit zur Folge hat, wobei ausserdem eine Redundanz der Messungen erreicht wird.

In weiterer Ausgestaltung der Erfindung wird im Anspruch 5 vorgeschlagen, dass das Sondenrohr mit den Messstellen nicht direkt in die elektrisch leitfähige Flüssigkeit eingetaucht wird, sondern in ein Sackrohr einsetzbar ist, wobei das Sackrohr in den auszumessenden, von der elektrischen leitenden Flüssigkeit durchströmbaren Bereich hineinragt und mit der Wand des Behälters bzw. der Rohrleitung, in dessen bzw. deren Inneren sich die elektrisch leitfähige Flüssigkeit befindet, dichtend verbunden ist. Erst diese Ausführungsform ermöglicht ein problemloses Auswechseln und Warten der Sonde und eine Verschiebung zur Ausmessung des Strömungsprofils. Bei dieser Ausführung der Erfindung besteht das Sackrohr aus einem gegen die betreffende Flüssigkeit resistenten Material und weist eine Wandstärke auf, welche den Druckverhältnissen und den jeweils verlangten Anforderungen entspricht. Ein solches Sackrohr kann mit dem Behälter bzw. der Rohrleitung verschweisst oder an dieser mit einem geeigneten Flansch befestigt sein.

In zusätzlicher Ausgestaltung der Erfindung wird im Anspruch 6 vorgeschlagen, dass zu einem Durchflussmesssystem nicht nur ein Sondenrohr, sondern mehrere ungefähr in einer Querschnittsebene einer Rohrleitung anbringbare Sondenrohre gehören. In diesen Sondenrohren können jeweils wieder eine oder mehrere Messstellen vorhanden sein, wobei die Sondenrohre vorzugsweise, wie oben erwähnt, in Sackrohre einsetzbar sind und die Messstellen möglichst gleichmässig auf die Querschnittsfläche verteilt sein sollten. Diese Anordnung eignet sich besonders für Messungen an Stellen, wo das Strömungsprofil nicht genau bekannt oder je nach Strömungsverhältnissen veränderlich ist. Die Sackrohre können dabei auch leicht in Strömungsrichtung gegeneinander versetzt und etwas länger als der Radius der Rohrleitung sein, damit ein Ausmessen des Strömungsprofils von jeder Seite bis zur Mitte möglich ist. Eine solche Anordnung mit mehreren von verschiedenen Seiten in die Strömung ragenden Sondenrohren eignet sich für besonders schwierige und genaue Messungen, bei denen zusätzlich eine grössere Redundanz gefordert wird. Besondere Anwendungsfälle können beispielsweise die Hauptkühlmittelleitungen eines flüssigmetallgekühlten Kernreaktors sein.

Im Anspruch 7 wird in weiterer Ausgestaltung der Erfindung vorgeschlagen, dass die Spulen und Spulenkörper in ihren Abmessungen den Raum im Inneren des Sondenrohres möglichst gut ausnutzen. Um kleine Abmessungen des ganzen Messystems zu erreichen, ist eine Gestaltung der Spulen entsprechend den Platzverhältnissen im Inneren des Sondenrohres dringend notwendig. Dabei ist zu bedenken, dass bei hohen Temperaturen nur mineralisolierte Leiter verwendet werden können, welche relativ grosse Durchmesser haben und sehr biegeempfindlich sind.

Im Anspruch 8 wird eine Möglichkeit zur günstigen Ausnutzung des vorhandenen Raumes angegeben. Danach ist die mittlere Spule jeder Messstelle etwas länger als die äusseren Spulen, wobei die mittlere Spule als Sendespule dient und aus einem isolierten Leiter mit einem leitenden Querschnitt gewickelt ist, der grösser ist, als der Querschnitt der Leiter der als Empfangsspulen dienenden äusseren Spulen. Da mit der Sendespule eine möglichst grosse Leistung eingestrahlt werden soll, um ein grosses Messignal zu ermöglichen, ist gerade diese Anordnung besonders sinnvoll. Die genau auf einem Durchmesser des Sondenrohres liegende Sendespule kann dadurch die grösste Ausdehnung haben, während die weiter aussen liegenden Empfangsspulen mit ihren dünneren Leitern auch weniger Platz benötigen.

Im Anspruch 9 wird vorgeschlagen, dass die Spulenwicklungen aus mineralisolierten hochtemperaturfesten Leitern bestehen, deren Zuleitungen im Inneren des Sondenrohres verlegt sind. Diese Ausgestaltung ermöglicht eine einfache Handhabung der Sonde und macht sie geeignet bis zu Temperaturen von mehreren 100 °C.

Im Anspruch 10 wird weiterhin eine Ausgestaltung der Erfindung vorgeschlagen, welche für ein einwandfreies Funktionieren von besonderer Bedeutung ist. Da sich mehrere nahe beieinanderliegende Messstellen bei Verwendung der gleichen Frequenz für alle Sendespulen gegenseitig beeinflussen würden, wird vorgeschlagen, die Sendespulen jeder Messstelle mit leicht unterschiedlichen Frequenzen anzuregen, wobei die Empfangsspulen mit Bandpassfiltern verbunden sind, die jeweils nur die Frequenz der zugehörigen Sendespule durchlassen. Dabei sollen die Frequenzen nach Möglichkeit nur gerade so unterschiedlich sein, wie dies die Güte der verwendeten Bandpassfilter zulässt. Auf diese Weise werden die von der Frequenz abhängigen sonstigen Eigenschaften jeder Messstelle, z.B. die Eindringtiefe in das Medium, nur vernachlässigbar geändert, gegenseitige Störungen der Spulen jedoch ausgeschlossen.

In zusätzlicher Ausgestaltung wird ausserdem im Anspruch 11 vorgeschlagen, dass die zu jeder Messstelle gehörende Elektronik mit steuerbaren Bandfiltern ausgestattet sein soll. Steuerbare Bandfilter lassen sich nachträglich auf die gewünschte Frequenz und Bandbreite einstellen, wodurch die genaue Wahl der Frequenzen und Bandbreiten erst nach der Installation einer solchen Anlage und nach entsprechenden experimentellen Untersuchungen erfolgen kann.

Die erfindungsgemässen Einzelheiten von Ausführungsbeispielen der Erfindung sind in der Zeichnung dargestellt, und zwar zeigen

Figur 1 einen Querschnitt durch ein Sondenrohr an einer Messstelle,

Figur 2 einen Querschnitt durch eine mit dem erfindungsgemässen Messystem ausgestattete Rohrleitung und

Figur 3 einen schematischen Querschnitt durch eine mit drei Sonden ausgestattete Rohrleitung.

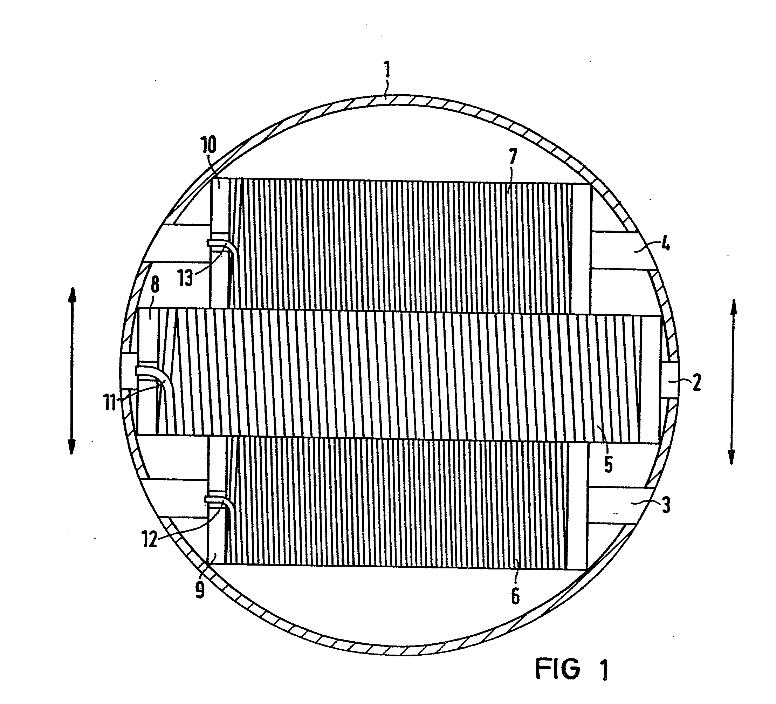

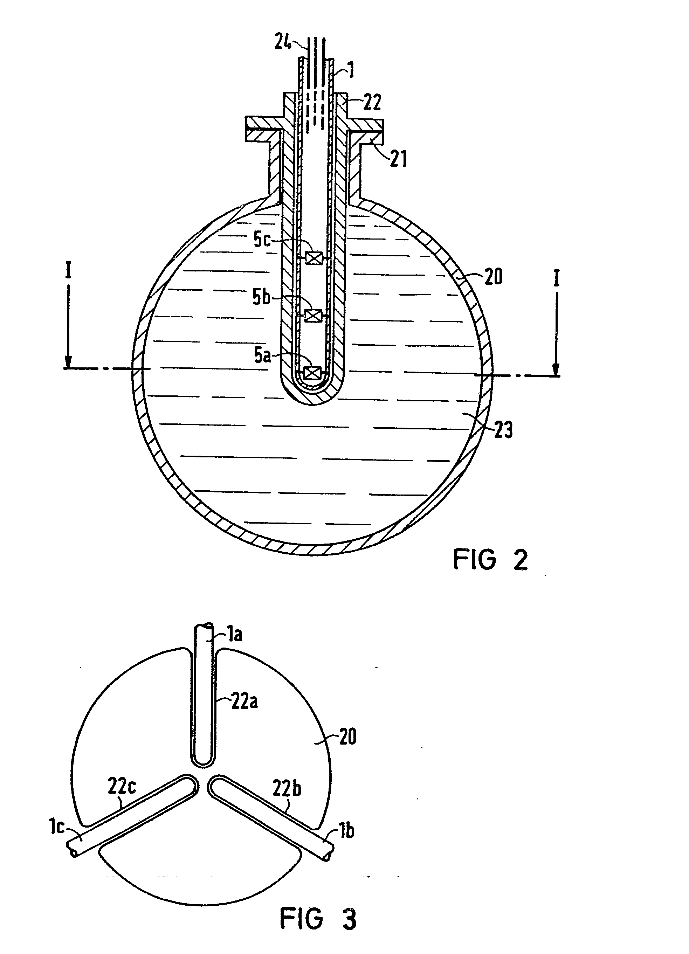

Figur 1 zeigt einen Querschnitt durch eine Messstelle entsprechend der Schnittlinie I–I in Figur 2. In einem Sondenrohr 1 sind nebeneinander, in einer Querschnittsebene liegend, drei Spulenkerne 2, 3, 4 angeordnet, auf welche drei Spulen 5, 6, 7 unter Einbringung von entsprechenden Spulenkörpern 8, 9, 10 gewickelt sind.

Die Spulenkerne 2, 3, 4 sind in die Wand des Sondenrohres 1 eingelassen und mit dieser fest verbunden, vorzugsweise laserverschweisst. Die Spulenwicklungen bestehen aus mineralisolierten Leitern 11, 12, 13, wobei die mittlere Spule als Sendespule dient und aus einem Leiter 11 mit einem Querschnitt gewickelt ist, der grösser ist als der Querschnitt der Leiter 12, 13 der beiden benachbarten Empfangsspulen 6, 7. Die Spulen müssen bei der Messung senkrecht zur Strömungsrichtung liegen, welche in der Zeichnung durch Pfeile angedeutet ist.

Figur 2 zeigt einen Querschnitt durch eine Rohrleitung und ein erfindungsgemässes Messsystem. In eine Rohrleitung 20 ragt ein mit Hilfe eines Flansches 21 befestigtes Sackrohr 22 hinein, im Inneren 23 des Rohres fliesst eine elektrisch leitfähige Flüssigkeit. Das Sackrohr 22 ist auf eine in der Zeichnung nicht dargestellte Weise dichtend mit dem Rohrleitungsflansch 21 verbunden, vorzugsweise mit diesem verschweisst. Es ragt etwas über die Mitte der Rohrleitung hinaus, damit Messungen bis zur Mitte des Strömungsprofils möglich sind. In das Innere des Sackrohres ist ein Sondenrohr 1 mit erfindungsgemässen Messystemen einsetzbar. Dabei kann ein Sondenrohr in seinem Inneren mehrere Messstellen 5a, 5b, 5c aufweisen, welche jeweils aus 3 Spulen bestehen und wie in Figur 1 dargestellt aufgebaut sind. Die Zuleitungen 24 zu den Messstellen werden im Inneren des Sondenrohres 1 nach aussen geführt. Das Sondenrohr kann leicht aus dem Sackrohr herausgezogen werden, so dass ein Auswechseln des Messystems oder auch ein Ausmessen des Strömungsprofils durch Bewegen der Sonde möglich ist.

In Figur 3 ist schliesslich schematisch die Möglichkeit dargestellt, eine besonders genaue Durchflussmessung mit Hilfe von mehreren in Sackrohre eingesetzten Sonden durchzuführen. Dazu wird eine Rohrleitung 20 ungefähr in einer Querschnittsebene mit 3 gleichmässig über den Umfang verteilten und radial ausgerichteten Sackrohren 22a, 22b, 22c versehen. In jedes dieser Sackrohre kann ein erfindungsgemässes Messystem in Sondenrohren 1a, 1b, 1c eingesetzt werden. Eine genaue Ausmessung der Strömungsprofile ist somit möglich.

Das erfindungsgemässe induktive Sonden-Durchflussmessystem eignet sich insbesondere für Rohrleitungen mit grossem Durchmesser für elektrisch leitfähige Flüssigkeiten, insbesondere für Hauptkühlmittelleitungen eines natriumgekühlten Kernreaktors. Die im Inneren von Sondenrohren angeordneten Messyteme lassen sich leicht, gegebenenfalls mit Hilfe eines Manipulators auswechseln, ohne dass die Dichtigkeit des Kreislaufes beeinflusst wird.

## Patentansprüche

1. Induktives Durchflussmessystem mit mindestens drei in einem von einer elektrisch leitfähigen Flüssigkeit durchströmbaren Bereich (23) angeordneten zylindrischen Induktionsspulen (5, 6, 7), deren gegenseitige transformatorische Kopplung durch die Strömungsgeschwindigkeit der Flüssigkeit beeinflussbar ist, und die in einer in Strömungsrichtung liegenden Ebene nebeneinander angeordnet sind, dadurch gekennzeichnet, dass die zylindrischen Induktionsspulen (5, 6, 7) in Bezug auf ihre Längsachsen ungefähr parallel nebeneinander angeordnet sind, wobei die Längsachsen der einzelnen Spulen (5, 6, 7) senkrecht zur Strömungsrichtung liegen und die einzelnen Spulen in einer Querschnittsebene eines Sondenrohres (1) angeordnet sind.

2. Induktives Durchflussmessystem nach Anspruch 1, dadurch gekennzeichnet, dass die Spulen (5, 6, 7) auf jeweils einen ferromagnetischen Kern (2, 3, 4) gewickelt sind.

3. Induktives Durchflussmessystem nach Anspruch 2, dadurch gekennzeichnet, dass die Spulenkerne (2, 3, 4) in die Wand des Sondenrohres (1) eingelasen, vorzugsweise mit dieser laserverschweisst, sind.

4. Induktives Durchflussmessystem nach einem der vorhergehenden Ansprüche, dadurch gekennzeichnet, dass in mehreren Querschnittsebenen eines Sondenrohres (1) je eine aus drei Spulen bestehende Messstelle (5a, 5b, 5c) angebracht ist.

5. Induktives Durchflussmessystem nach einem der vorhergehenden Ansprüche, dadurch gekennzeichnet, dass das Sondenrohr (1) in ein Sackrohr (22) einsetzbar ist, wobei das Sackrohr (22) in den auszumessenden, von der elektrisch leitfähigen Flüssigkeit durchströmbaren Bereich (23) hineinragt und mit der Wand (20) des Behälters bzw. der Rohrleitung, in dessen bzw. deren Inneren sich die elektrisch leitfähige Flüssigkeit befindet, dichtend verbunden ist.

6. Induktives Durchflussmessystem nach einem der vorhergehenden Ansprüche, dadurch gekennzeichnet, dass das System aus mehreren, ungefähr in einer Querschnittsebene einer Rohrleitung (20) anbringbaren Sondenrohren (1a, 1b, 1c) mit jeweils einer oder mehreren Messstellen (5a, 5b, 5c) besteht, wobei die Sondenrohre (1a, 1b, 1c) vorzugsweise in Sackrohre (22a, 22b, 22c) einsetzbar sind und wobei die Messstellen möglichst gleichmässig auf die Querschnittsfläche verteilt sind.

7. Induktives Durchflussmessystem nach einem der vorhergehenden Ansprüche, dadurch gekennzeichnet, dass die Spulen (5, 6, 7) und Spulenkörper (8, 9, 10) in ihren Abmessungen den Raum im Inneren des Sondenrohres (1) möglichst gut ausnutzen.

8. Induktives Durchflussmessystem nach einem der vorhergehenden Ansprüche, dadurch gekennzeichnet, dass die mittlere Spule (5) jeder Messstelle (5, 6, 7) etwas länger als die äusseren Spulen (6, 7) ist, wobei die mittlere Spule (5) als Sendespule dient und aus einem isolierten Leiter (11) mit einem leitenden Querschnitt gewickelt ist, der grösser ist als der Querschnitt der Leiter (12, 13) der als Empfangsspulen dienenden äusseren Spulen (6, 7).

9. Induktives Durchflussmessystem nach einem der vorhergehenden Ansprüche, dadurch gekennzeichnet, dass die Spulenwicklungen aus mineralisolierten, hochtemperaturfesten Leitern (11, 12, 13) bestehen, deren Zuleitungen (24) im Inneren des Sondenrohres (1) verlegt sind.

10. Induktives Durchflussmessystem nach einem der vorhergehenden Ansprüche, dadurch gekennzeichnet, dass die Anregungsfrequenzen der Sendespulen jeder Messstelle leicht unterschiedlich sind und dass die Empfangsspulen mit Bandpassfiltern verbunden sind, die jeweils nur die Frequenz der zugehörigen Sendespule durchlassen.

11. Induktives Durchflussmessystem nach Anspruch 10, dadurch gekennzeichnet, dass die zu jeder Messstelle gehörende Elektronik mit steuerbaren Bandfiltern ausgestattet ist.

**Revendications**

1. Système inductif de mesure de débits comportant au moins trois bobines cylindriques d'induction (5, 6, 7), disposées dans un espace (23) pouvant être traversé par un liquide électriquement conducteur, et dont le couplage mutuel, avec effet de transformateur, peut être influencé par la vitesse d'écoulement du liquide et qui sont disposées côte-à-côte dans un plan s'étendant dans la direction d'écoulement, caractérisé par le fait que les bobines cylindriques d'induction (5, 6, 7) sont disposées côte-à-côte de telle sorte que leurs axes longitudinaux sont approximativement parallèles, lesdits axes longitudinaux des différentes bobines (5, 6, 7) étant perpendiculaires à la direction de l'écoulement les différentes bobines étant disposées dans un plan de coupe transversal d'un tube formant sonde (1).

2. Système inductif de mesure de débits selon la revendication 1, caractérisé en ce que les bobines (5, 6, 7) sont enroulées chacune sur un noyau ferromagnétique (2, 3, 4).

3. Système inductif de mesure de débits selon la revendication 2, caractérisé en ce que les noyaux (2, 3, 4) des bobines sont insérés dans la paroi du tube formant sonde (1), et ce de préférence en y étant fixés par soudage au laser.

4. Système inductif de mesure de débits selon l'une des revendications précédentes, caractérisé en ce qu'un point de mesure respectif (5a, 5b, 5c) constitué de trois bobines est placé dans plusieurs plans de coupe transversaux d'un tube formant sonde (1).

5. Système inductif de mesure de débits selon l'une des revendications précédentes, caractérisé par le fait que le tube formant sonde (1) peut être inséré dans un tube fermé à une extrémité (22), qui pénètre dans l'espace (23), dans lequel la mesure doit être exécutée, et qui peut être traversé par le liquide électriquement conducteur et est relié de façon étanche à la paroi (20) du récipient ou de la conduite tubulaire, à l'intérieur duquel ou de laquelle se trouve liquide électriquement conducteur.

6. Système inductif de mesure de débits selon l'une des revendications précédentes, caractérisé par le fait que le système est constitué par plusieurs tubes formant sondes (1a, 1b, 1c), qui peuvent être montés approximativement dans un plan de coupe transversal d'une conduite tubulaire (20) et comportent chacun un ou plusieurs points de mesure (5a, 5b, 5c), les tubes formant sondes (1a, 1b, 1c) pouvant être insérés de préférence dans des trous borgnes (22a, 22b, 22c), et les points de mesure étant répartis d'une manière aussi uniforme que possible dans la surface en coupe transversale.

7. Système inductif de mesure de débits selon l'une des revendications précédentes, caractérisé par le fait que les bobines (5, 6, 7) et les corps de bobines (8, 9, 10) occupent aussi complètement que possible, de par leurs dimensions, l'espace situé à l'intérieur du tube formant sonde (1).

8. Système inductif de mesure de débits selon l'une des revendications précédentes, caractérisé par le fait que la bobine médiane (5) de chaque point de mesure (5, 6, 7) est légèrement plus longue que les bobines extérieures (6, 7), la bobine médiane (5) étant utilisée en tant que bobine d'émission et est formée par enroulement d'un conducteur isolé (11) possédant une section transversale conductrice qui est supérieure à la section transversale du conducteur (12, 13) des bobines extérieures (6, 7) utilisées comme bobines de réception.

9. Système inductif de mesure de débits selon l'une des revendications précédentes, caractérisé par le fait que les enroulements des bobines sont constitués par des conducteurs (11, 12, 13) comportant un isolant minéral et résistant aux températures élevées, et dont les lignes d'alimentation (24) sont disposées à l'intérieur du tube formant sonde (1).

10. Système inductif de mesure de débits selon l'une des revendications précédentes, caractérisé par le fait que les fréquences d'excitation des bobines d'émission de chaque point de mesure sont légèrement différentes et que les bobines de réception sont reliées à des filtres passe-bande, qui transmettent respectivement uniquement la fréquence de la bobine d'émission associée.

11. Système inductif de mesure de débits selon la revendication 10, caractérisé par le fait que le système électronique associé à chaque point de mesure est pourvu de filtres de bande pouvant être commandés.

**Claims**

1. Inductive flow measuring system with at least three cylindrical induction coils (5, 6, 7) disposed in an area (23) through which an electrically conductive liquid is flowing, the mutual transformer coupling of which may be influenced by the rate of flow of the liquid and which are disposed adjacent to one another in a plane lying in the direction of flow, characterised in that the cylindrical induction coils (5, 6, 7) are disposed adjacently approximately parallel to one another with respect to their longitudinal axes, the longitudinal axes of the individual coils (5, 6, 7) lying at right angles to the direction of flow and the individual coils being disposed in a cross-sectional plane of a probe tube (1).

2. Inductive flow measuring system according to claim 1, characterised in that the coils (5, 6, 7) are each wound on to a ferro-magnetic core (2, 3, 4).

3. Inductive flow measuring system according to claim 2, characterised in that the coil cores (2, 3, 4) are embedded in the wall of the probe tube (1), preferably laser welded to it.

4. Inductive flow measuring system according to one of the preceding claims, characterised in that fitted in each of several cross-sectional planes of a probe tube (1) is a test point (5a, 5b, 5c) consisting of three coils.

5. Inductive flow measuring system according to one of the preceding claims, characterised in that the probe tube (1) is insertable into a pocket tube (22), the pocket tube (22) projecting into the area (23) to be measured, through which the electrically conductive liquid is flowing, and being connected, forming a seal, to the wall (20) of the vessel or the pipeline, inside which the electrically conductive fluid is located.

6. Inductive flow measuring system according to one of the preceding claims, characterised in that the system consists of several probe tubes (1a, 1b, 1c) which may be fitted approximately in one cross-sectional plane of a pipeline (20), each with one or several test points (5a, 5b, 5c), the probe tubes (1a, 1b, 1c) being preferably insertable into pocket tubes (22a, 22b, 22c) and the test points being distributed as evenly as possible over the area of cross-section.

7. Inductive flow measuring system according to one of the preceding claims, characterised in that in their dimensions the coils (5, 6, 7) and the coil forms (8, 9, 10) utilize the space inside the probe tube (1) to the best advantage.

8. Inductive flow measuring system according to one of the preceding claims, characterised in that the central coil (5) of each test point (5, 6, 7) is slightly longer than the outer coils (6, 7), the centre coil (5) acting as transmitting coil and being wound with an insulated conductor (11) with a conductive cross-section which is greater than the cross-section of the conductors (12, 13) of the outer coils (6, 7) acting as receiving coils.

9. Inductive flow measuring system according to one of the preceding claims, characterised in that the coil windings are made of mineral-insulated, high temperature resistant conductors (11, 12, 13), the supply lines (24) of which are disposed inside the probe tube (1).

10. Inductive flow measuring system according to one of the preceding claims, characterised in that the excitation frequencies of the transmitting coils of each test point are slightly different and that the receiving coils are connected to band pass filters, each of which only let through the frequency of the associated transmitting coil.

11. Inductive flow measuring system according to claim 10, characterised in that the electronics belonging to each test point are equipped with controllable band pass filters.

FIG 1

FIG 2

FIG 3